Europäisches Patentamt

European Patent Office

Office européen des brevets

(11) Numéro de publication : **0 429 375 B1**

## (12) FASCICULE DE BREVET EUROPEEN

(45) Date de publication du fascicule du brevet :
**21.12.94 Bulletin 94/51**

(51) Int. Cl.$^5$ : **F28D 5/02, F25B 33/00**

(21) Numéro de dépôt : **90420486.4**

(22) Date de dépôt : **12.11.90**

(54) **Dispositif d'échange thermique avec film ruisselant.**

(30) Priorité : **14.11.89 FR 8915283**

(43) Date de publication de la demande :
**29.05.91 Bulletin 91/22**

(45) Mention de la délivrance du brevet :
**21.12.94 Bulletin 94/51**

(84) Etats contractants désignés :
**AT BE CH DE DK ES FR GB GR IT LI LU NL SE**

(56) Documents cités :
**WO-A-82/00597**
**GB-A- 144 413**
**GB-A- 990 762**
**NL-C- 79 998**

(73) Titulaire : **PECHINEY RECHERCHE**
**(Groupement d'Intérêt Economique géré par**
**l'ordonnance du 23 Septembre 1967)**
**10, place des Vosges**
**Immeuble Balzac**
**La Défense 5**
**F-92400 Courbevoie (FR)**

(72) Inventeur : **Le Goff, Pierre**
**22, rue de la Croix Gagnée**
**F-54000 Nancy (FR)**
Inventeur : **Clauzade, Bertrand**
**40, rue Federico Garcia Lorca**
**F-63370 Lempdes (FR)**

(74) Mandataire : **Séraphin, Léon et al**
**PECHINEY**
**28, rue de Bonnel**
**F-69433 Lyon Cedex 03 (FR)**

EP 0 429 375 B1

## Description

La présente invention est relative aux échangeurs de chaleur à un dispositif d'échange thermique tel que défini dans le préambule de la revendication 1 et connu, par exemple, par le WO-A-82/00 597. L'invention concerne plus particulièrement le domaine des évaporateurs à film ruisselant.

Les évaporateurs à film ruisselant (désignés par EFR dans la suite de cette description) sont très utilisés dans l'industrie chimique, agro-alimentaire, en climatisation et réfrigération pour réaliser des échanges thermiques entre un fluide et un flux de liquide de faible épaisseur sans formation de bulles dans ce dernier.

Ils se distinguent en cela des bouilleurs dans lesquels l'ensemble de la phase liquide à vaporiser, d'épaisseur relativement grande, est le siège de bulles qui se forment à la surface de la paroi chauffée.

Les EFR présentent de nombreux avantages par rapport aux bouilleurs : d'abord, du fait même de l'absence de bulles, leurs parois chauffées s'entartrent moins vite ; du fait de leur forte conductance de transfert, ils fonctionnent avec un faible gradient thermique, ce qui est favorable à la durée de vie des équipements ; enfin, ils permettent la vaporisation de liquide thermiquement peu stables.

Ils présentent cependant deux inconvénients : il est difficile d'une part, de distribuer un flux de liquide en couche mince uniforme, en tête d'un EFR, et d'autre part, de conserver cette couche sans qu'elle se déchire et se rassemble en ruisselets, entraînant ainsi l'assèchement de certaines zones de la paroi chauffée.

La performance propre d'un EFR peut se définir principalement par deux grandeurs : d'une part par la puissance spécifique qui est la masse de flux de liquide vaporisée par seconde rapportée au volume total ou à la masse de l'EFR, cette même notion pouvant aussi s'exprimer par le flux de transfert par unité de volume ou de masse, et d'autre part par le taux de vaporisation qui est la fraction vaporisée du flux de liquide traversant l'EFR. La fiabilité de fonctionnement et le niveau de maintenance exigés, bien que moins facilement quantifiables que les grandeurs précédentes, sont aussi des facteurs de performance à prendre en compte, en particulier les vitesses d'encrassement, d'entartrage ou de corrosion.

Un EFR de "base" qui serait constitué d'une simple paroi verticale chauffée sur laquelle ruissellerait le film de liquide à évaporer présenterait les inconvénients déjà cités. De nombreux brevets décrivent des améliorations de cet EFR "de base".

Ainsi, afin de répartir le flux de liquide uniformément et améliorer l'efficacité du transfert thermique, le brevet EP No.0 221 722 décrit un dispositif d'échange thermique comportant un conduit vertical dont la surface externe est garnie d'ailettes en forme de "dents" disposées en rangées et groupées entre elles, qui forment des promoteurs de turbulence qui dispersent et divisent le flux de liquide courant le long de la paroi chauffée.

Afin d'augmenter le taux de vaporisation, le brevet WO 82/00597 décrit un dispositif d'échange thermique comportant un conduit vertical dans lequel circule un fluide et à la surface externe duquel sont disposés des réservoirs pour retenir en permanence une fraction du flux de liquide qui s'écoule le long de la paroi externe du conduit vertical, de façon à augmenter le temps de séjour moyen du flux de liquide dans cet EFR.

Enfin le brevet GB-A-143413 décrit des améliorations de condenseurs tubulaires, dans lesquels circule un gaz à condenser, refroidis extérieurement par l'écoulement d'eau. Ces améliorations consistent typiqement en ce que l'intérieur du tube contient une feuille métallique spiralée afin que le gaz circule en spirale, et en ce qu'un cordage est enroulé en hélice à l'extérieur du tube pour ralentir l'écoulement de l'eau.

Ces trois brevets ne constituent que des solutions partielles qui ne permettent pas d'atteindre l'ensemble des performances souhaitées. Ainsi, le brevet EP 0 221 722 n'améliore la régularité de la distribution du flux de liquide qu'en le dispersant en gouttelettes ou filets de liquide et laisse le taux de vaporisation sensiblement au niveau de celui d'un EFR constitué d'une simple paroi chauffée. De même, le brevet GB143413 ne modifie que faiblement l'écoulement de l'eau de refroidissement et son temps de séjour sur la paroi externe du tube, et par ailleurs, le cordage enroulé autour du tube diminue la surface d'échange direct entre la paroi externe et l'eau. En ce qui concerne la feuille spiralée contenue à l'intérieur du tube, elle modifie l'écoulement gazeux mais ne participe pas directement à l'échange thermique entre le gaz à condenser et l'eau de refroidissement.

Enfin, le brevet WO 82/00597 permet d'augmenter le temps de séjour moyen, donc le taux de vaporisation mais n'améliore pas le flux de transfert thermique qui reste au maximum égal à celui d'une simple paroi chauffée ; en effet, le flux de liquide situé dans les petits réservoirs, par exemple en forme de coupelle, forme une couche épaisse néfaste au transfert thermique puisque la conductivité d'un liquide est de 100 à 500 fois plus faible que celle des matériaux conducteurs utilisés dans les EFR. En outre, l'accumulation de liquide dans de petites coupelles augmente le risque d'entartrage et d'encrassement en cours de fonctionnement et surtout dès que le flux de liquide s'arrête de couler.

L'invention a pour objectif de répondre simultanément aux trois besoins suivants : d'une part une puissance spécifique élevée, d'autre part un taux de vaporisation élevé (temps de séjour élevé) et enfin une vitesse d'entartrage et d'encrassement faible, ce que ne permet pas simultanément l'art antérieur.

Cet objectif est atteint par l'invention telle que définie en revendication 1.

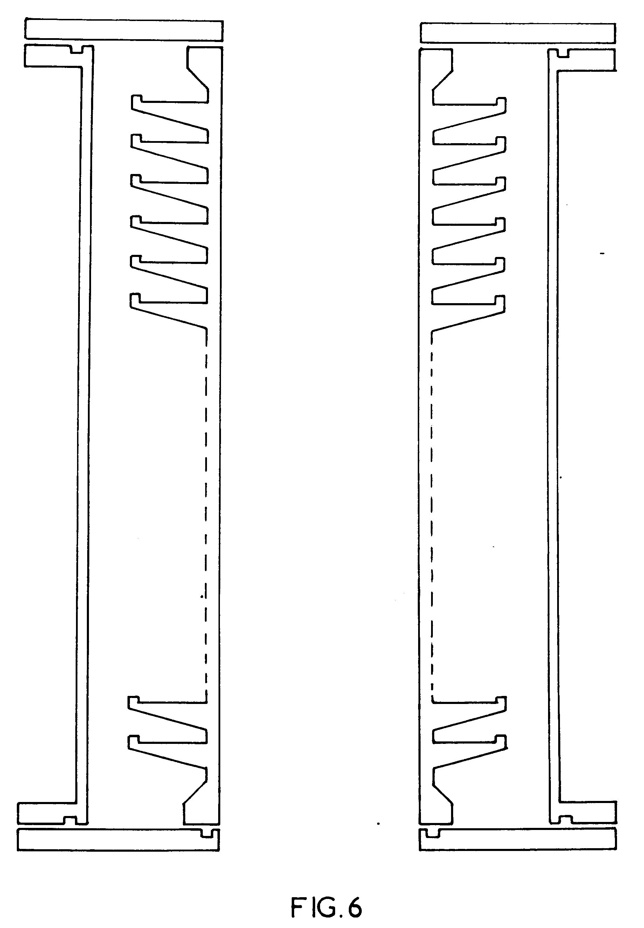

Le fluide circulant dans le tube peut être un liquide, une vapeur ou un gaz, éventuellement sous pression ; ce peut être aussi des gaz de combustion et dans ce cas, l'EFR aura un tube de plus grand diamètre (voir figure 6).

Les applications les plus courantes du dispositif concernent, d'une part le domaine de la réfrigération et de la climatisation, d'autre part le domaine de la chimie, la parachimie, l'agroalimentaire et concernent typiquement la concentration de solutions aqueuses diluées, les réactions gaz-liquide qui nécessitent un échange de chaleur, par exemple l'absorption dans l'eau d'acide chlorhydrique gazeux, l'oxydation ou l'hydrogénation de composés organiques. Dans ces derniers cas, il sera préférable de faire circuler le flux gazeux à contre-courant du flux de liquide, dans l'espace hélicoïdal (12) qui surmonte le flux de liquide ; on pourra aussi maintenir la phase gazeuse à une pression différente de la pression atmosphérique : une désorption sera éventuellement facilitée par une pression inférieure à la pression atmosphérique ; de même une absorption, ou le maintien d'un composé volatil à l'état liquide, pourront nécessiter une pression supérieure à la pression atmosphérique. Dans ces applications, en particulier dans le cas de réactions chimiques gaz-liquide, on pourra recycler en tête de l'EFR le flux de liquide de sortie si la réaction gaz-liquide n'a pas atteint le degré d'avancement souhaité en un seul passage.

Le dispositif selon l'invention se caractérise d'abord par l'ensemble des paramètres ci-après qui définissent la forme géométrique du dispositif et dont les valeurs dépendent de différents critères liés à la technologie, à la science du génie chimique ou à l'usage pratique des EFR :
- le tube central (2) de l'EFR dans lequel circule un fluide (1) peut être de section circulaire et dans ce cas son diamètre extérieur De est compris entre 1 mm et 1000 mm et de préférence entre 5 et 100 mm.

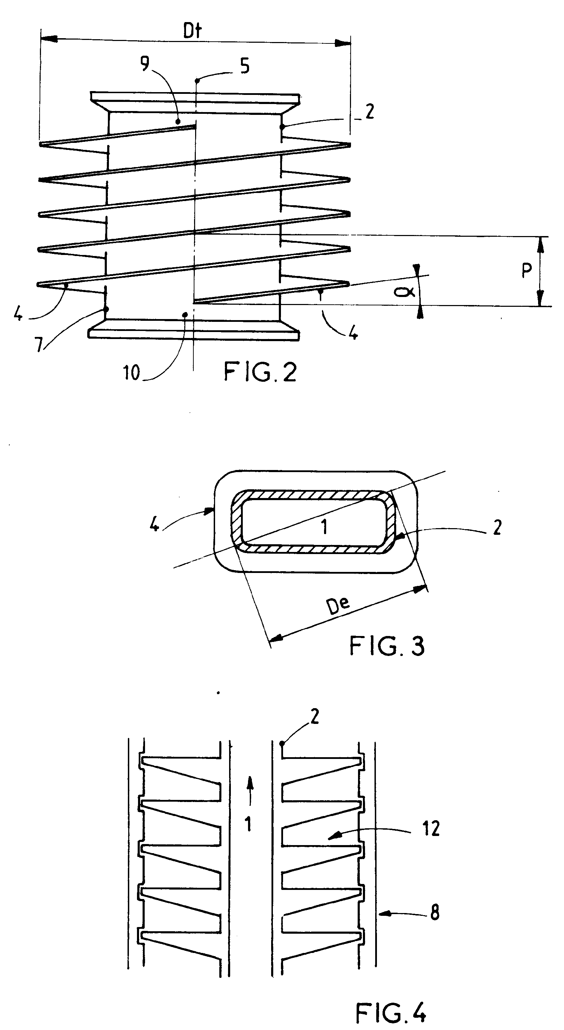

Il peut aussi avoir une section carrée, rectangulaire (voir fig. 3), triangulaire, en forme d'ellipse ou de parallélogramme, de plus grand diamètre extérieur De compris entre 1 mm et 2000 mm et de préférence compris entre 5 mm et 500 mm, de sorte que la (les) ailette(s) forme(nt) une pseudo-hélice, mais pour ne pas alourdir la description, les mots "hélice" ou "hélicoïdal" engloberont aussi le dispositif ayant une pseudo-hélice entourant un tube de section autre que circulaire.

L'intérêt de formes autres que circulaires est évident quand une certaine compacité est recherchée ou quand l'EFR doit être intégré à un autre appareil imposant une contrainte d'ordre géométrique.

- l'ailette hélicoïdale (4) qui s'enroule autour du tube a une largeur La en relation avec le diamètre extérieur du tube De : le rapport La/De est compris entre 0,05 et 5 et de préférence compris entre 0,1 et 1, ce rapport pouvant varier avec la hauteur dans un même EFR ; en effet, par exemple dans un procédé comportant un fort taux d'évaporation, il peut être préférable d'avoir une largeur d'ailette plus grande dans la partie haute de l'EFR que dans la partie basse et dans ce cas, on peut éviter la forme tronconique en modifiant simultanément la largeur d'ailette La et le diamètre extérieur De de façon à garder constante la somme "La+De" sur toute la hauteur de l'EFR.

- l'ailette hélicoïdale a une pente, mesurée par l'angle $\alpha$ à l'extrémité de l'ailette la plus éloignée du tube, et un pas p qui satisfont la relation $p = \pi \cdot Dt \cdot tg\ \alpha$ pour un EFR cylindrique de diamètre extérieur Dt (voir figure 2) ; l'angle $\alpha$ est compris entre 1° et 60° et de préférence entre 3° et 10° et peut varier dans un même EFR de façon à modifier localement la vitesse du flux de liquide.

- l'ailette hélicoïdale a une largeur La en relation avec son épaisseur à sa base Eb, mesurée parallèlement à l'axe du tube ; en effet, l'ailette n'est pas seulement un support du flux de liquide, elle transmet aussi la plus grande partie sinon la totalité du flux thermique de sorte que, pour transmettre efficacement le flux thermique même à l'extrémité de l'ailette la plus éloignée du tube, une certaine épaisseur de l'ailette à sa base est nécessaire : le rapport La/Eb doit être inférieur à 20 et de préférence inférieur à 10. La limite inférieure de ce rapport se situe à 0,5 et de préférence à 1 : en-dessous de ces valeurs, l'ailette a une grande épaisseur relative que ne justifient plus en général ni des considérations d'ordre mécanique, ni des considérations de transfert thermique.

L'EFR selon l'invention comporte au moins une ailette hélicoïdale mais il peut y avoir intérêt pour des raisons de productivité à avoir plusieurs ailettes dans la mesure où il n'y a pas par ailleurs de limitation au tranfert thermique. Le nombre maximum n d'ailettes est au plus égal au rapport p/Eb ; le pas p est imposé par le choix du diamètre extérieur Dt et de l'angle $\alpha$ qui tous deux peuvent être des spécifications de base ; l'épaisseur de l'ailette à sa base Eb, peut être imposée par la largeur La de l'ailette.

L'épaisseur Ee de l'ailette à son extrémité la plus éloignée du tube, mesurée dans le plan de l'axe du tube, peut aller de 0, dans le cas d'une ailette effilée, à la distance Ds séparant deux spires successives, distance qui est égale au rapport "Pas/nombre d'ailettes".

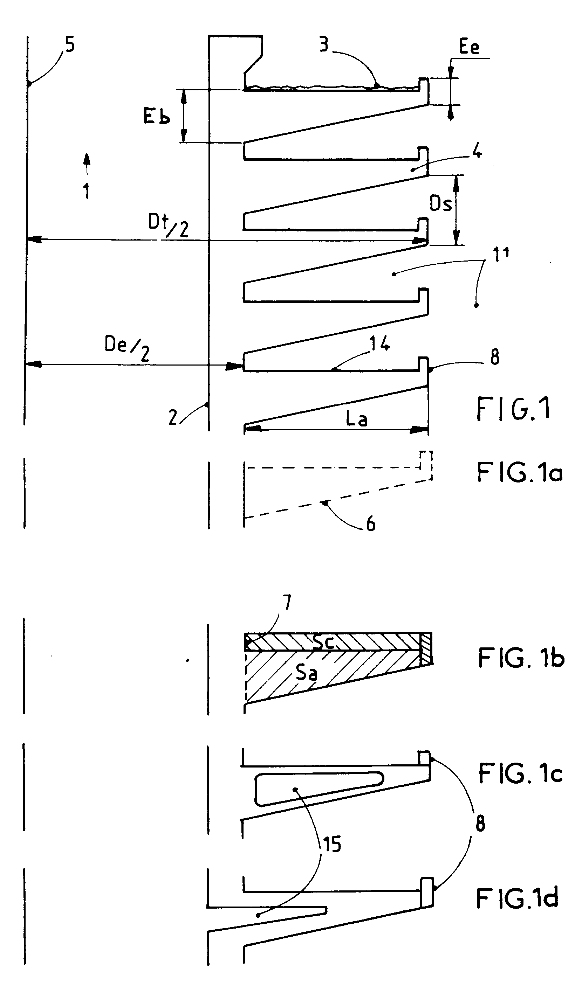

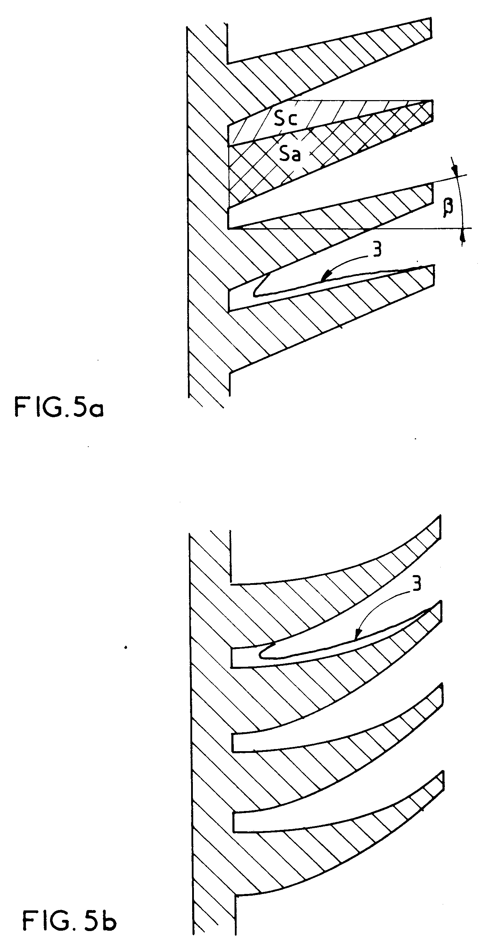

L'ailette hélicoïdale se décrit par le déplacement d'une génératrice (6) située dans le plan de l'axe du tube. Cette génératrice, qui peut comporter des parties courbes, des segments de droite en totalité ou en partie, définit (voir fig. 1-b) une surface d'ailette Sa (section de l'ailette dans le plan de l'axe du tube) et une surface de canal Sc (section du canal) délimitée par la partie supérieure de la génératrice, avec éventuellement la paroi externe du tube et/ou une fraction ou la partie inférieure de la spire suivante située au-dessus (voir figure 5-a). Ces deux surfaces ne sont pas indépendantes puisque, toutes choses égales par ailleurs, la surface Sa va varier selon la quantité de flux de liquide donc selon la surface Sc du canal même si le flux de liquide ne l'occupe pas en totalité : le rapport Sc/Sa est compris entre 0,1 et 10 et de préférence entre 0,5 et 5.

Il pourra être avantageux d'avoir des spires assez proches les unes des autres, de l'ordre de quelques millimètres à quelques dizaines de millimètres pour tirer le meilleur parti des phénomènes de mouillage des surfaces par un liquide qui peuvent augmenter significativement les surfaces d'échange (voir figure 5a et b) tout en conservant une couche mince.

Les revendications 2 à 31 présentent des modes particuliers de réalisation de l'invention :

- le lit du canal peut être rainuré, les rainures pouvant être hélicoïdales, pour augmenter la surface d'échanges, pour mieux canaliser le flux de liquide en couche mince. On peut aussi munir le lit du canal d'aspérités formant promoteur de turbulence pour augmenter le flux de transfert, par exemple en plaçant dans le lit du canal un grillage amovible à maille fine.
- Il peut être nécessaire d'augmenter l'échange thermique grâce à l'emploi d'une ailette creuse (fig.1-c) dans laquelle on fait circulier un fluide, de préférence à contre-courant du flux de liquide, et éventuellement différent du fluide circulant dans le tube. L'ailette creuse peut aussi communiquer avec l'intérieur du tube (fig. 1-d).
- Plus spécialement dans les cas où l'EFR sert à mettre en oeuvre une réaction chimique, le tube et/ou l'ailette, creuse ou non, peuvent être poreux de manière à permettre également un transfert de matière entre le fluide circulant dans le tube et/ou l'ailette et le flux de liquide circulant dans le canal. Ainsi, par exemple, pour faire réagir progressivement un fluide A et un liquide B qui forment un composé C volatil à extraire au fur et à mesure de sa formation, on fait circuler le fluide A dans le tube poreux et/ou l'ailette poreuse, éventuellement creuse et le liquide B dans le canal hélicoïdal ; en jouant notamment sur la pression du fluide A, on peut ainsi mettre en contact progressivement le réactif A avec le réactif B et permettre l'extraction du composé C volatil ; on peut aussi laisser au tube sa fonction de véhicule du fluide de transfert thermique et ne faire circuler le réactif A que dans l'ailette creuse et poreuse.

- l'ailette comporte éventuellement un rebord extérieur (8), qui peut faire bloc avec l'ailette ou être rapporté et peut avoir plusieurs fonctions : canaliser le flux de liquide, canaliser en plus le flux gazeux, assurer un contact thermique avec l'extérieur de l'EFR, ou au contraire isoler thermiquement l'EFR.

On comprendra que selon la ou les fonctions recherchées, le rebord extérieur sera en matériau isolant ou conducteur, de hauteur variable et plus ou moins solidaire de l.'ailette.

L'EFR selon l'invention est constitué d'un tube et d'une ou plusieurs ailettes , avec éventuellement leur rebord, en matériaux de conductivité thermique supérieure à 1 W .$m^{-1}$ . $K^{-1}$ et de préférence supérieure à 8 W. $m^{-1}$ . $K^{-1}$.

Le matériau du tube et celui de chaque ailette peuvent être différents, tout comme le matériau de l'ailette et celui du rebord. Ces matériaux sont de préférence choisis parmi :

- le graphite et les matériaux carbonés rendus conducteurs thermiques, mis en forme par toute technique connue telle que l'usinage, de préférence automatique, l'extrusion etc.., à un stade d'élaboration du matériau où il n'a pas forcément ses caractéristiques définitives mais où la forme obtenue par usinage, extrusion ou autre technique est conservée.
- les métaux et les alliages métalliques, mis en forme par tout procédé connu tel que l'usinage, de préférence automatique, le moulage, le frittage de poudres métalliques, ....
- les céramiques conductrices thermiques, mises en forme par tout procédé connu tel que le moulage, l'extrusion, etc....
- les matières plastiques rendues conductrices de la chaleur, mises en forme par tout procédé connu tel que l'extrusion, l'injection , et...
- les matériaux composites et les matériaux multicouches conducteurs de la chaleur, mis en forme par tout procédé connu tel que l'extrusion, l'injection, le moulage, la pultrusion et.....

L'EFR peut être obtenu par assemblage de ses différents parties, tube, ailette et éventuellement rebord, qu'il s'agisse d'assemblage mécanique, de soudure, de collage ou de tout autre moyen connu d'assemblage. Lorsqu'une circulation de la phase gazeuse à contre-courant du flux de liquide est souhaitée, le rebord sera avantageusement constitué d'un tube de diamètre intérieur sensiblement égal au diamètre extérieur de l'EFR (dans le cas d'un EFR cylindrique). Par exemple, l'EFR sera introduit à force dans le tube "rebord" si un bon contact thermique entre l'ailette et le tube "rebord" est souhaité, c'est-à-dire si ce tube "rebord" contribue à l'échange thermique. Sinon, on pourra visser l'EFR dans un tube "rebord" rainuré intérieurement (voir figure 4), ou simplement glisser l'EFR dans un tube "rebord" ayant un jeu suffisant pour cela, un tel tube "rebord" pouvant être constitué des mêmes matériaux que ceux de l'EFR ou de matériaux isolants (par exemple tubes, ou gaines en matière plastique éventuellement thermorétractable).

Comme cela a été mentionné, l'étalement d'un flux de liquide en couche mince, recherché dans l'invention bien que le dispositif selon l'invention puisse dans certains cas être aussi utilisé sans que le flux de liquide soit en couche mince, résulte de la géométrie propre du canal mais aussi de la mouillabilité du canal par le flux de liquide. Pour améliorer la mouillabilité, il peut être nécessaire de soumettre le lit du canal à un traitement de surface, par exemple une oxydation superficielle. De manière générale, l'EFR peut être soumis sur la totalité ou sur une partie de sa surface, à des traitements par exemple améliorant la conductivité thermique de surface (dépôts électrolytiques de métaux) ou permettant d'ajuster la porosité du tube ou des ailettes au niveau souhaité.

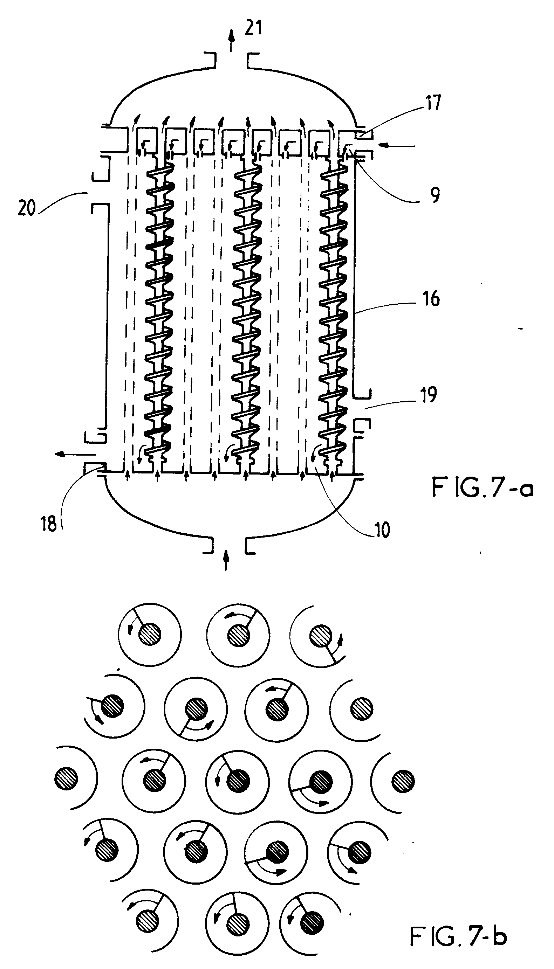

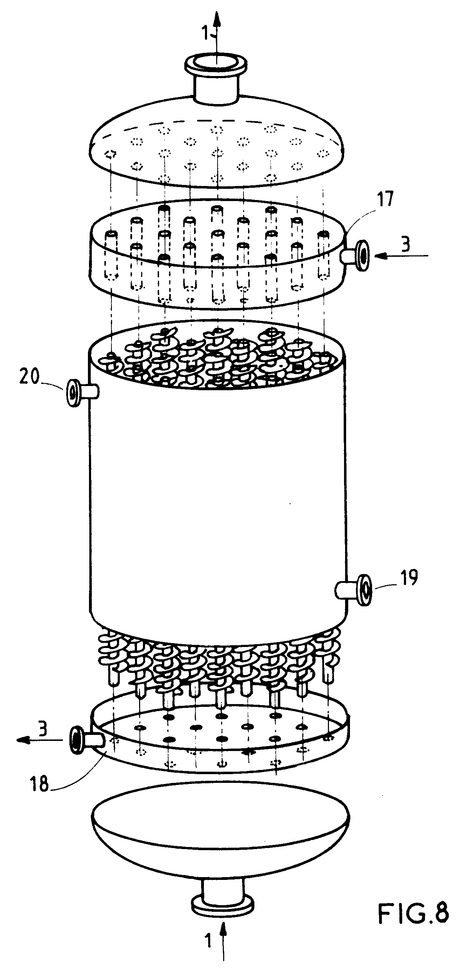

L'EFR est un module que l'on peut utiliser tel quel, mais pour augmenter la capacité de traitement, il est souhaitable de faire fonctionner en parallèle et simultanément un grand nombre de ces modules EFR. Pour cela, on place dans une enceinte (16) l'ensemble des modules selon un arrangement qui peut être hexagonal compact (voir figures 7 et 8) dans le cas d'une enceinte (16) cylindrique. A ces modules sont associés:

- des moyens d'alimentation de chaque module en flux de liquide situés à la partie supérieure de l'enceinte (17)
- des moyens de récupération du flux liquide à la partie inférieure de l'enceinte (18)
- des moyens permettant la circulation de la phase gazeuse avec éventuellement une ou plusieurs arrivées, de préférence dans la partie basse de l'enceinte (19) et avec un ou plusieurs départs de préférence dans la partie haute de l'enceinte (20).
- des moyens permettant la circulation du fluide à l'intérieur des tubes et éventuellement des ailettes si elles sont creuses.

On peut aussi souhaiter augmenter le temps de séjour du flux de liquide en disposant bout à bout et en maintenant solidaires et alignés des modules EFR, à l'aide de tous moyens connus pour rendre jointifs des tubes.

Aux avantages de l'invention déjà mentionnés, s'en ajoutent plusieurs liés à l'hydrodynamique du flux de liquide ruisselant sur les ailettes.

L'expérience a montré que, du fait même de la forme hélicoïdale des ailettes, le liquide ne s'écoule pas en filets parallèles : en effet deux phénomènes s'opposent :

- un mouvement centrifuge des filets, dû à la courbure même des trajectoires de liquide
- un mouvement centripète des filets, dû au fait que la pente locale est plus forte au voisinage de la paroi intérieure que sur le bord extérieur.

il en résulte un mélangeage radial important des divers filets de liquide.

En première conséquence, il n'est pas nécessaire d'installer en tête d'appareil un distributeur assurant une répartition uniforme du liquide sur toute la largeur de l'ailette. Cette uniformité s'établit spontanément.

En seconde conséquence, la probabilité d'apparition de zones sèches est plus faible, car leur "remouillage" par des mouvements latéraux de liquide se fait aisément.

Dans le cas d'un film d'eau ruisselant sur une paroi verticale, le seuil d'apparition de zones sèches se situe à un nombre de Reynolds de l'ordre de 30 quand on diminue lentement le débit liquide.

Or, dans le cas du tube à ailettes de graphite de 170 mm de diamètre, décrit à l'exemple 4, le débit a pu être abaissé jusqu'à un nombre de Reynolds de 10 sans assèchement apparent de la surface.

En troisième conséquence, le mélangeage radial conduit à un temps de séjour uniforme pour chaque partie du flux de liquide, ce qui est à la fois un facteur de constance de qualité et un facteur très favorable dans le cas de produits thermosensibles.

Enfin, la quatrième conséquence est l'augmentation du coefficient de transfert qui influe directement sur la performance du transfert thermique.

Les figures et les exemples qui suivent illustrent l'invention et permettront de mieux comprendre son fonctionnement, sa réalisation et ses avantages.

## DESCRIPTION DES FIGURES

Les mêmes repères sont utilisés pour désigner des éléments semblables ayant la même fonction.

## Figure 1

. elle représente plusieurs vues partielles du tube et des spires d'une ailette, en coupe selon l'axe vertical du tube.
. sur les figures 1-a et 1-b figurent les symboles suivants :

De = diamètre extérieur du tube
La = largeur de l'ailette
Dt = diamètre extérieur de l'EFR
Eb = épaisseur de la base de l'ailette
Ee = épaisseur de l'ailette à son extrémité
Ds = distance entre spires successives
Sc = surface du canal (section)
Sa = surface de l'ailette (section)

. la figure 1-c schématise une ailette creuse et, avec la figure 1-d illustre d'autres variantes de rebord.

**Figure 2**

. elle représente une vue extérieure d'un EFR a deux ailettes, sur laquelle figure l'angle $\alpha$ et le pas p d'une hélice.

**Figure 3**

. elle représente en coupe, perpendiculairement à son axe vertical, un EFR de section rectangulaire.

**Figure 4**

. elle représente, en coupe selon l'axe vertical, un EFR dont le rebord est constitué par un tube rainuré intérieurement.

**Figure 5**

. les figures 5-a et 5-b représentent, en coupe selon l'axe vertical, une vue partielle d'un tube et des spires d'une ailette, la figure 5-a étant un exemple de génératrice composée seulement de segments de droite alors que dans la figure 5-b, la génératrice comporte des courbes.

**Figure 6**

. la figure 6 représente un EFR ayant un tube de grand diamètre, utilisé comme paroi d'une chambre de combustion.

**Figure 7**

. la figure 7-a représente, en coupe selon l'axe vertical, un ensemble comportant plusieurs EFR en parallèle, et qui en illustre le fonctionnement .
. la figure 7-b représente, en coupe perpendiculaire à l'axe vertical, la disposition hexagonale compacte des EFR.

**Figure 8**

. la figure 8 est une vue d'un ensemble d'EFR avec les pièces principales séparées les unes des autres, qui illustre le montage d'un ensemble d'EFR.

**EXEMPLES**

**Exemple 1**

On a fabriqué un EFR par usinage d'un bloc cylindrique de graphite imprégné fabriqué par LE CARBONE LORRAINE.

Caractéristiques géométriques de l'EFR :

- EFR à monoailette de pas p = 20 mm et de profil représenté à la figure 5-a
- Diamètre extérieur De = 50 mm
- Largeur de l'ailette La = 50 mm
- Epaisseur de l'ailette à sa base Eb = 15 mm
  . Epaisseur à l'extrémité Ee = 5 mm
- Angle $\alpha$ de l'hélice = 2,43°
- Pente $\beta$ du canal = 6°
- Hauteur H = 800 mm

Performances comparées de cet EFR avec un EFR constitué d'un tube en graphite de même hauteur et de même diamètre (noté avec indice o) :
- Augmentation de surface d'échange :

$$\frac{S}{So} = 5$$

- Augmentation de la puissance thermique $Q (= h \cdot s \cdot \Delta T)$

. $\Delta T$, qui est la différence de température à travers l'épaisseur du film ruisselant , est supposé avoir la même valeur dans les deux cas

. h, qui est le coefficient de transfert, a été déterminé expérimentalement dans chaque cas : à même vitesse d'écoulement du liquide, le coefficient h sur ailette est environ 3 fois plus grand que le coefficient ho sur paroi verticale (ho = 1 kw . m$^{-2}$ . K$^{-1}$ et h = 3 Kw . m$^{-2}$ . K$^{-1}$).

Ceci est probablement dû au mélangeage turbulent des filets de fluide, résultant de courants de circulation radiale, dûs à la force centrifuge :

$$\frac{Q}{Qo} = 15$$

Mais compte tenu de la résistance thermique non nulle de l'ailette , ce rapport, pour une ailette en graphite telle que définie précédemment, vaut environ 4

$$\frac{Q'}{Qo} = 4$$

- Taux de vaporisation :
  Pour une même vitesse d'écoulement u (en m.s$^{-1}$) donc pour un même nombre de Reynolds, le débit de liquide coulant sur l'ailette est :

$$M = \rho . u . La$$

celui coulant sur la paroi du tube de base est :

$$Mo = \rho u . \pi . De$$

$$\frac{M}{Mo} = \frac{La}{\pi\, De} = 0,32$$

$$\frac{T}{To} = \frac{Q'/M}{Qo/Mo} = 3,14 . \frac{Q'}{Qo} \simeq 12$$

- Enfin, pour une même vitesse d'écoulement u, le temps de séjour ts du liquide dans l'appareil est :
  . pour le cylindre de base :

$$tso = \frac{H}{u}$$

. pour un EFR selon l'invention :

$$ts = \frac{H}{p} \cdot \frac{Ls}{u.\sin\alpha}$$ avec Ls = longueur moyenne d'une spire (=300mm) et $\alpha$ = valeur de la pente moyenne d'une spire ( $\alpha$ = 3,8°)

$$\frac{ts}{tso} = \frac{Ls}{p \sin\alpha} = \frac{(Ls)2}{(p)2} \simeq 230$$

En résumé :

. la puissance spécifique d'évaporation a été sensiblement multipliée par 4

. le taux de vaporisation a été multiplié par 12

. le temps de séjour a été multiplié par 230 en passant d'un EFR à paroi verticale en graphite à l'EFR selon l'invention.

### Exemple 2

On a fabriqué un EFR par usinage d'un bloc cylindrique d'aluminium ayant les mêmes caractéristiques géométriques que celle de l'exemple 1.

L'approche expérimentale suivie est aussi celle de l'exemple 1.

Résumé des résultats :

. la puissance spécifique d'évaporation a été multipliée par 7

. le taux de vaporisation a été multiplié par 23

. le temps de séjour a été multiplié par 230 en passant d'un EFR à paroi verticale en aluminium à l'EFR selon l'invention.

### Exemple 3

Les figures 7 et 8 montrent le principe d'un évaporateur formé d'un faisceau de tubes à ailettes contenu dans une calandre cylindrique verticale. Ces tubes sont chauffés par le passage des gaz chauds issus d'une chambre de combustion (de gaz, de fuel,...).

Les tubes sont disposés selon une structure hexagonale, avec une distance entre bords d'ailettes de 50 mm, comme indiqué sur la figure 7-b. Il y a donc ainsi 29 tubes par m2 de section droite de la calandre. Avec h = 3 kw.m$^{-2}$ K$^{-1}$ et $\Delta t$ = 5°C, on calcule que la puissance thermique est de 11,8 kW par mètre de tube et la puissance spécifique du faisceau de tubes et de : 340 kw/m3 au lieu de 90 kW/m3 sans ailettes.

### Exemple 4

On a fabriqué un EFR par usinage d'un bloc cylindrique de graphite imprégné fabriqué par LE CARBONE LORRAINE.

### Caractéristiques géométriques de l'EFR :

- EFR à monoailette de pas p = 20 mm et de profil représenté à la figure 1-a
- Diamètre extérieur De = 170 mm

- Epaisseur de paroi du tube = 10 mm
- Largeur de l'ailette La = 52 mm
- Angle $\alpha$ moyen = 1,64°
- Hauteur = 600 mm

Résultats obtenus :

$$\frac{S}{So} = 3$$

$$\frac{Q}{Qo} = 9 \text{ et } \frac{Q'}{Qo} = 2,3$$

$$\frac{M}{Mo} = 10,3$$

$$\frac{T}{To} = 24$$

En résumé, la puissance spécifique d'évaporation a été multipliée par 2,3 et le taux de vaporisation par 24.

### Exemple 5

La figure (6) montre l'utilisation d'un tel tube à ailettes comme paroi d'une chambre de combustion. Son diamètre intérieur est de 150 mm, et sa hauteur de 600 mm. Il est muni de 28 spires d'une monohélice, soit une surface totale d'évaporation de 0,90 m2.

A partir des résultats expérimentaux, on calcule que, pour une puissance d'évaporation Q = 12 kw, la face intérieure de la paroi en graphite (donc au contact de la flamme de combustion) est à une température de 107°C, quand la surface évaporante du film liquide est à 100°C.

A cette basse température, le graphite n'est pas attaqué. L'expérience montre que jusqu'aux environs de 400°C, le graphite résiste à la corrosion d'une flamme, même en présence d'un excès d'oxygène.

## Revendications

1. Dispositif d'échange thermique comprenant un tube (2) sensiblement vertical en matériau conducteur de la chaleur à l'intérieur duquel circule un fluide (1), et des moyens , disposés hélicoïdalement autour dudit tube, destinés à ralentir l'écoulement par gravité, à l'extérieur dudit tube, d'un flux de liquide (3), objet de l'échange thermique, en contact avec une phase gazeuse, caractérisé en ce que, lesdits moyens sont constitués par un canal (14) formé par une ailette (4) et en ce que,

    a) de manière à obtenir un écoulement par gravité régulier et sans accumulation dudit flux dans ledit canal, ledit canal est continuement incliné, l'angle $\alpha$ de l'hélice ou de la pseudohélice formée par chaque ailette par rapport au plan horizontal étant compris entre 1° et 60°,

b) de manière à obtenir un écoulement dudit flux en couche mince, le profil dudit canal est adapté pour compenser la force centrifuge qui tend à rassembler ledit flux à la périphérie dudit canal,

c) de manière à assurer une grande capacité d'échange thermique entre ledit flux et ledit fluide, ladite ailette (4) est en matériau conducteur de chaleur et en contact thermique avec ledit tube (2), ledit tube (2) étant, soit de section circulaire et ayant un diamètre extérieur De compris entre 1 mm et 1000 mm et de préférence compris entre 5 et 100 mm, soit de section non-circulaire, carrée, rectangulaire (13), triangulaire, en forme d'ellipse ou de parallélogramme, de plus grand diamètre extérieur De compris entre 1 mm et 2000 mm et de préférence compris entre 5 mm et 500mm, ledit tube étant alors muni extérieurement d'une ailette (4) en forme de pseudo-hélice.

2. Dispositif selon la revendication 1, dans lequel le rapport de la largeur de l'ailette La et du plus grand diamètre extérieur De est compris entre 0,05 et 5 et de préférence compris entre 0,1 et 1.

3. Dispositif selon la revendication 2, dans lequel le rapport La/De peut varier de la partie supérieure à la partie inférieure d'un même dispositif de 0,05 à 5 ou de 5 à 0,05, La et/ou De pouvant varier seuls ou simultanément pour assurer la variation du rapport La/De.

4. Dispositif selon la revendication 3, dans lequel l'angle $\alpha$ de l'hélice ou de la pseudo-hélice formée par chaque ailette par rapport au plan horizontal est compris de préférence entre 3° et 10°, et peut varier dans un même dispositif, cet angle étant mesuré à l'extrémité de l'ailette la plus éloignée dudit tube.

5. Dispositif selon la revendication 4, dans lequel le rapport de la largeur de l'ailette La et de l'épaisseur de l'ailette à sa base Eb, celle-ci étant mesurée parallèlement à l'axe du tube et à la surface externe dudit tube, peut varier entre 0,5 et 20 et de préférence entre 1 et 10.

6. Dispositif selon la revendication 5, dans lequel le nombre maximum d'ailettes n, dénombré dans un plan perpendiculaire à l'axe dudit tube, peut être au plus égal au rapport du pas de l'hélice ou de la pseudo-hélice que constitue ladite ailette et de l'épaisseur de ladite ailette à sa base Eb.

7. Dispositif selon la revendication 6, dans lequel l'épaisseur Ee de ladite ailette à son extrémité peut varier de 0 à la distance Ds mesurée dans le plan de l'axe dudit tube, entre deux spires successives relatives à une ou plusieurs ailettes.

8. Dispositif selon la revendication 7, dans lequel ladite ailette présente un profil en coupe définissant une surface d'ailette Sa et un surface de canal Sc, mesurées dans le plan de l'axe dudit tube, telles que le rapport Sc/Sa est compris entre 0,1 et 10 et de préférence entre 0,5 et 5.

9. Dispositif selon la revendication 8, dans lequel ladite surface d'ailette Sa peut être délimitée par des segments de droite.

10. Dispositif selon la revendication 9, dans lequel ladite surface d'ailette Sa n'est délimitée que par des segments de droite.

11. Dispositif selon la revendication 9, dans lequel la partie supérieure de ladite ailette et éventuellement la partie extérieure du tube, en contact avec ledit flux de liquide, peut être rainurée de façon à augmenter la surface d'échange entre ledit flux de liquide et le lit dudit canal.

12. Dispositif selon la revendication 11, dans lequel la partie supérieure de ladite ailette, et éventuellement la partie du tube en contact avec ledit flux de liquide peut être munie d'aspérités formant promoteur de turbulence pour augmenter le flux de transfert.

13. Dispositif selon la revendication 12, dans lequel ladite ailette peut être creuse (15) de manière à pouvoir être parcourue par un fluide qui peut être à contre-courant dudit flux de liquide et qui peut être différent dudit fluide s'écoulant dans ledit tube.

14. Dispositif selon la revendication 13, dans lequel le matériau dudit tube, et éventuellement celui de ladite ailette, peut être poreux et présenter un effet de membrane de manière à ce qu'une partie dudit fluide puisse traverser la paroi dudit tube, le matériau de ladite ailette et intéragir de manière physique, chimique ou physico-chimique avec ledit flux de liquide.

15. Dispositif selon la revendication 14, dans lequel le matériau dudit tube peut être différent du matériau de ladite ailette.

16. Dispositif selon la revendication 15, dans lequel ladite ailette comporte un rebord extérieur (8) et le matériau dudit rebord extérieur (8) peut être différent du matériau constituant le reste de ladite ailette et être éventuellement en matériau isolant.

17. Dispositif selon l'une quelconque des revendications 1 à 16, dans lequel le matériau dudit tube et ladite ailette est choisi parmi ceux ayant une conductivité thermique supérieure à 1 W.m.$^{-1}$.K$^{-1}$, et de préférence supérieure à 8 W.m.$^{-1}$·K$^{-1}$·

18. Dispositif selon la revendication 17, dans lequel le matériau dudit tube et/ou de ladite ailette est en graphite ou en matériau carboné conducteur de la chaleur.

19. Dispositif selon la revendication 17, dans lequel le matériau dudit tube et/ou de ladite ailette est en métal ou en alliage métallique.

20. Dispositif selon la revendication 17, dans lequel le matériau dudit tube et/ou de ladite ailette est en céramique conductrice de la chaleur.

21. Dispositif selon la revendication 17, dans lequel le matériau dudit tube et/ou de ladite ailette est en matière plastique rendue conductrice de la chaleur.

22. Dispositif selon la revendication 17, dans lequel le matériau dudit tube et/ou de ladite ailette est en matériau composite ou en matériau multicouches conducteurs de la chaleur.

23. Dispositif ou partie de dispositif selon la revendication 18, fabriqué par usinage ou extrusion dudit matériau, à tout stade de son élaboration qui permet de conserver la forme dudit dispositif.

24. Dispositif ou partie du dispositif selon la revendication 19, fabriqué par usinage ou moulage dudit matériau, ou frittage de poudres métalliques dudit matériau.

25. Dispositif ou partie de dispositif selon la revendication 20, fabriqué par moulage ou extrusion dudit matériau.

26. Dispositif ou partie de dispositif selon la revendication 21, fabriqué par extrusion ou injection dudit matériau.

27. Dispositif ou partie de dispositif selon la revendication 22, fabriqué par un procédé choisi parmi l'extrusion, l'injection, le moulage ou la pultrusion dudit matériau.

28. Dispositif dans lequel des parties de dispositif selon les revendications 23 à 27, sont assemblées par un procédé choisi parmi l'assemblage mécanique, la soudure, le collage.

29. Dispositif selon la revendication 28, dans lequel un dispositif ne comportant pas de rebord extérieur est assemblé, avec un rebord extérieur de façon à former ledit canal et éventuellement à limiter le volume de la phase gazeuse au seul espace compris entre les spires de(s) ailette(s) dudit dispositif de manière à permettre la circulation d'une phase gazeuse à contre-courant de flux de liquide.

30. Dispositif selon la revendication 29, dans lequel le rebord extérieur est un tube, éventuellement rainuré intérieurement, dont les dimensions intérieures correspondent sensiblement aux dimensions extérieures dudit dispositif.

31. Dispositif selon l'une quelconque des revendications 23 à 29, caractérisé en ce qu'il a été soumis à une phase de traitement ou de revêtement de surface de tout ou partie dudit dispositif.

32. Ensemble de dispositifs selon l'une quelconque des revendications 1 à 22, caractérisé en ce qu'il comporte :
    - une enceinte (16) contenant plusieurs desdits dispositifs, disposés parallèlement les uns aux autres
    - des moyens d'alimentation en flux de liquide situés à la partie supérieure de l'enceinte (17)
    - des moyens de récupération du flux de liquide situés à la partie inférieure de l'enceinte (18)
    - des moyens permettant la circulation de la phase gazeuse avec éventuellement une ou plusieurs arrivées de préférence dans la partie basse de l'enceinte (19), et avec un ou plusieurs départs, de préférence dans la partie haute de l'enceinte (20)
    - des moyens permettant la circulation dudit fluide à l'intérieur desdits tubes (21) et éventuellement de ladite ailette (15)

de manière à multiplier la capacité d'échange d'énergie thermique.

33. Ensemble de dispositifs selon l'une quelconque des revendications 1 à 22, dans lequel plusieurs desdits dispositifs sont placés bout à bout les uns par rapport aux autres grâce à tout moyen connu pour maintenir alignés et jointifs des tubes.

34. Application du dispositif selon l'une quelconque des revendications 1 à 31, à la désorption, évaporation, en particulier dans les évaporateurs industriels et dans la climatisation, et à la condensation, à l'absorption de gaz ou vapeurs dans les réacteurs gaz-liquide et dans la climatisation.

**Patentansprüche**

1. Wärmetauschervorrichtung mit einem im wesentlichen vertikalen Rohr (2) aus Wärmeleitendem Material, innerhalb dessen ein Fluid (1) zirkuliert und schraubenlinienförmig um das Rohr angeordneten Einrichtungen zum Verlangsamen des Schwerefließens einer Flüssigkeitsströmung (3) außerhalb des Rohrs, die Gegenstand des Wärmeaustauschs und in Kontakt mit einer gasförmigen Phase ist, **dadurch gekennzeichnet**, daß die Einrichtungen aus einem durch einen Steg (4) gebildeten Kanal (14) bestehen, und daß
   a) um ein gleichmäßiges Schwerefließen ohne Ansammlung des Flusses im Kanal zu erreichen, der Kanal kontinuierlich geneigt ist, wobei der Winkel α zwischen der von jedem Steg gebildeten Schraubenlinie oder Pseudoschraubenlinie und der Horizontalebene zwischen 1° und 60° liegt,
   b) um ein Fließen der Strömung in dünner Schicht zu erhalten, das Profil des Kanals eingerichtet ist, um die Zentrifugalkraft zu kompensieren, die eine Ansammlung der Strömung am Rande des Kanals bewirkt,
   c) um eine größere Wärmeaustauschkapazität zwischen der Strömung und dem Fluid herzustellen, der Steg (4) aus wärmeleitendem Material und in thermischem Kontakt mit dem Rohr (2) ist, wobei das Rohr (2) einen kreisförmigen Querschnitt mit einem Außendurchmesser De zwischen 1 mm und 1000 mm, vorzugsweise zwischen 5 und 100 mm oder einen nicht-kreisförmigen, quadratischen, rechteckigen (13), dreieckigen, elliptischen oder parallelogrammförmigen Querschnitt mit größtem Außendurchmesser De zwischen 1 mm und 2000 mm, vorzugsweise zwischen 5 mm und 500 mm, hat, wobei das Rohr dann außen mit einem Steg (4) in Form einer Pseudoschraubenlinie versehen ist.

2. Vorrichtung nach Anspruch 1, bei der das Verhältnis zwischen der Breite des Stegs La und dem größten Außendurchmesser De zwischen 0,05 und 5, vorzugsweise zwischen 0,1 und 1, liegt.

3. Vorrichtung nach Anspruch 2, bei der das Verhältnis La/De vom oberen zum unteren Bereich der Vorrichtung von 0,05 bis 5 oder von 5 bis 0,05 variieren kann, wobei La und/oder De allein oder gleichzeitig variieren können, um die Änderung des Verhältnisses La/De zu bewirken.

4. Vorrichtung nach Anspruch 3, bei der der Winkel α zwischen der von jedem Steg gebildeten Schraubenlinie oder Pseudoschraubenlinie und der Horizontalebene vorzugsweise zwischen 3° und 10° liegt und an einer einzigen Vorrichtung variieren kann, wobei der Winkel an den am weitesten vom Rohr entfernten Ende des Stegs gemessen wird.

5. Vorrichtung nach Anspruch 4, bei der das Verhältnis zwischen der Breite des Stegs La und der Dicke des Stegs an seiner Basis Eb, die parallel zur Achse des Rohrs und zur Außenoberfläche des Rohrs gemessen wird, zwischen 0,5 und 20, vorzugsweise zwischen 1 und 10, variieren kann.

6. Vorrichtung nach Anspruch 5, bei der die maximale Anzahl an Stegen n, gezählt in einer zur Achse des Rohrs senkrechten Ebene, höchstens gleich dem Verhältnis zwischen der Steigung der von dem Steg gebildeten Schraubenlinie oder Pseudoschraubenlinie zur Dicke des Stegs an seiner Basis Eb sein kann.

7. Vorrichtung nach Anspruch 6, bei der die Dicke Ee des Stegs an seinem Ende zwischen 0 und dem in der Ebene der Achse des Rohre gemessenen Abstand Ds zwischen zwei aufeinanderfolgenden, zu einem oder mehreren Stegen gehörenden Windungen variieren kann.

8. Vorrichtung nach Anspruch 7, bei der der Steg im Schnitt ein Profil aufweist, das eine Stegoberfläche Sa und eine Kanaloberfläche Sc, gemessen in der Ebene der Achse des Rohrs, aufweist, so daß das Verhältnis Sc/Sa zwischen 0,1 und 10 und vorzugsweise zwischen 0,5 und 5 liegt.

9. Vorrichtung nach Anspruch 8, bei der die Stegoberfläche Sa durch Geradensegmente begrenzt sein kann.

10. Vorrichtung nach Anspruch 9, bei der die Stegoberfläche Sa nur durch Geradensegmente begrenzt ist.

11. Vorrichtung nach Anspruch 9, bei der der obere Bereich des Stegs und eventuell der äußere Bereich des Rohrs, die in Kontakt mit der Flüssigkeitsströmung sind, mit Rillen versehen sind, um die Austauschoberfläche zwischen der Flüssigkeitsströmung und dem Bett des Kanals zu vergrößern.

12. Vorrichtung nach Anspruch 11, bei der der obere Bereich des Stegs und eventuell der in Kontakt mit der Flüssigkeitsströmung befindliche Teil des Rohrs mit Rauhigkeiten versehen sein kann, die zur Erhöhung des Übertragsflusses die Turbulenz fördern.

13. Vorrichtung nach Anspruch 12, bei der der Steg (15) hohl sein kann, so daß er von einem Fluid durchströmt werden kann, das entgegen der Strömungsrichtung der Flüssigkeit fließen kann und von dem im Rohr fließenden Fluid verschieden sein kann.

14. Vorrichtung nach Anspruch 13, bei der das Material des Rohrs und ggf. das des Stegs porös sein kann und eine Membranwirkung aufweisen kann, so daß ein Teil des Fluids die Wand des Rohrs und das Material des Stegs durchqueren und physikalisch, chemisch oder physikalisch-chemisch mit der Flüssigkeitsströmung wechselwirken kann.

15. Vorrichtung nach Anspruch 14, bei der das Material des Rohrs von dem des Stegs verschieden sein kann.

16. Vorrichtung nach Anspruch 15, bei der der Steg einen äußeren Rand (8) aufweist und das Material des äußeren Rands (8) von dem Material, das den Rest des Stegs bildet, verschieden und eventuell ein isolierendes Material sein kann.

17. Vorrichtung nach einem der Ansprüche 1 bis 16, bei der das Material des Rohrs und des Stegs unter jenen mit einer Wärmeleitfähigkeit von über 1 W/mK, vorzugsweise über 8 W/mK, ausgewählt wird.

18. Vorrichtung nach Anspruch 17, bei der das Material des Rohrs und/oder des Stegs Graphit oder ein wärmeleitendes kohlenstoffhaltiges Material ist.

19. Vorrichtung nach Anspruch 17, bei der das Material des Rohrs und/oder des Stegs Metall oder eine Metall-Legierung ist.

20. Vorrichtung nach Anspruch 17, bei der das Material des Rohrs und/oder des Stegs wärmeleitende Keramik ist.

21. Vorrichtung nach Anspruch 17, bei der das Material des Rohrs und/oder des Stegs wärmeleitend gemachtes Kunststoffmaterial ist.

22. Vorrichtung nach Anspruch 17, bei der das Material des Rohrs und/oder des Stegs wärmeleitendes Verbund- oder Mehrlagenmaterial ist.

23. Vorrichtung oder Vorrichtungsteil nach Anspruch 18, gefertigt durch abtragende Bearbeitung oder Extrusion des Materials, in jedem Herstellungsstadium, in dem die Form der Vorrichtung beibehalten werden kann.

24. Vorrichtung oder Vorrichtungsteil nach Anspruch 19, gefertigt durch abtragende Bearbeitung oder Formguß des Materials oder durch Sintern von Metallpulvern aus dem Material.

25. Vorrichtung oder Vorrichtungsteil nach Anspruch 20, gefertigt durch Formguß oder Extrusion des Materials.

26. Vorrichtung oder Vorrichtungsteil nach Anspruch 21, gefertigt durch Extrusion oder Spritzguß des Materials.

27. Vorrichtung oder Vorrichtungsteil nach Anspruch 22, gefertigt durch ein unter Extrusion, Spritzguß, Formguß oder Pultrusion des Materials ausgewähltes Verfahren.

28. Vorrichtung, in der Vorrichtungsteile nach einem der Ansprüche 23 bis 27 durch ein unter mechanischem Zusammenbau, Schweißen und Kleben ausgewähltes Verfahren zusammengebaut sind.

29. Vorrichtung nach Anspruch 28, bei der eine Vorrichtung ohne äußeren Rand mit einem äußeren Rand zusammengebaut ist, um den Kanal zu formen und eventuell das Volumen der Gasphase allein auf den Raum zwischen den Windungen des oder der Stege der Vorrichtung zu beschränken, um die Zirkulation einer Gasphase entgegen der Flüssigkeitsströmung zu ermöglichen.

30. Vorrichtung nach Anspruch 29, bei der der äußere Rand ein eventuell innerlich gerilltes Rohr ist, dessen Innenmaße im wesentlichen den Außenmaßen der Vorrichtung entsprechen.

31. Vorrichtung nach einem der Ansprüche 23 bis 29, dadurch gekennzeichnet, daß sie einer Phase der Behandlung oder Beschichtung der Oberfläche der ganzen Vorrichtung oder eines Teils davon unterzogen worden ist.

32. System von Vorrichtungen nach einem Ansprüche 1 bis 22, gekennzeichnet durch:
    - eine Hülle (16), die mehrere der Vorrichtungen parallel zueinander angeordnet enthält,
    - im oberen Bereich der Hülle (17) angeordnete Versorgungsvorrichtungen für die Flüssigkeitsströmung,
    - im unteren Bereich der Hülle (18) angeordnete Rückgewinnungseinrichtungen für die Flüssigkeitsströmung,
    - Einrichtungen, die die Zirkulation der Gasphase ermöglichen, mit eventuell einer oder mehreren zuleitungen, vorzugsweise am Boden der Hülle (19), und ein oder mehreren Ableitungen, vorzugsweise an der Spitze der Hülle (20),
- Einrichtungen, die die Zirkulation des Fluids innerhalb der Rohre (21) und eventuell des Stegs (15) ermöglichen,
um die Wärmeaustauschkapazität zu vervielfachen.

33. System von Vorrichtungen nach einem der Ansprüche 1 bis 22, bei dem mehrere der Vorrichtungen Ende an Ende angeordnet sind mit Hilfe eines beliebigen bekannten Mittels, um die Rohre fluchtend und in Verbindung zu halten.

34. Anwendung der Vorrichtung nach einem der Ansprüche 1 bis 31 zur Desorption und Verdampfung, insbesondere bei industriellen Verdampfern und der Klimatechnik sowie zur Kondensation und Absorption von Gasen oder Dämpfen bei Gas-Flüssigkeit-Reaktoren und in der Klimatechnik.

**Claims**

1. A heat exchange device comprising a substantially vertical tube (2) of heat conductive material, inside which a fluid (1) circulates, and means, arranged helically about said tube, intended to slow down flow by gravity. and outside said tube a flow of liquid (3) which undergoes heat exchange and which is in contact with a gaseous phase, characterised in that said means are constituted by a channel (14) in the form of a fin (4) and in that,
   a) in order to obtain a regular flow by gravity without any of said flow accumulating in said channel, said channel is continuously inclined, the angle a of the helix or of the pseudo-helix formed by each fin in relation to the horizontal plane being between 1° and 60°,
   b) in order to obtain a running of said flow in a thin layer, the profile of said channel is adapted to compensate for the centrifugal force which tends to amass said flow at the periphery of said channel,
   c) in order to ensure a large heat exchange capacity between said flow and said liquid, said fin (4) is of a heat conductive material and is in thermal contact with said tube (2), said tube (2) being either of circular section and of an external diameter De of between 1 mm and 1000 mm, and preferably of between 5 and 100 mm, or of non-circular, square, rectangular (13), triangular section, or of a section in the form of an ellipse or parallelogram, with a maximum external diameter De of between 1 mm and 2000 mm, preferably of between 5 mm and 500 mm, said tube thus being provided externally with a pseudo-helical fin (4).

2. A device according to Claim 1, in which the ratio of the width of the fin La and of the greatest outside diameter De is between 0.05 and 5, preferably between 0.1 and 1.

3. A device according to Claim 2, in which the ratio La/De can vary from the upper part to the lower part of one and the same device from 0.05 to 5 or from 5 to 0.05, La and/or De possibly varying by themselves or simultaneously to produce the variation in the ratio La/De.

4. A device according to Claim 3, in which the angle $\alpha$ of the helix or of the pseudo-helix formed by each fin in relation to the horizontal plane is preferably between 3° and 10°, and can vary in one and the same device, this angle being measured at the end of the fin which is most remote from said tube.

5. A device according to Claim 4, in which the ratio of the width of the fin La and of the thickness of the fin at its base Eb, this latter being measured parallel to the axis of the tube and outer surface of said tube, can vary between 0.5 and 20, and preferably between 1 and 10.

6. A device according to Claim 5, in which the maximum number of fins n, counted in a plane perpendicular to the axis of said tube, can be at most equal to the ratio of the pitch of the helix or of the pseudo-helix constituted by said fin and the thickness of said fin at its base Eb.

7. A device according to Claim 6, in which the thickness Ee of said fin at its end can vary from O to the distance Ds measured in the plane of the axis of said tube between two successive turns in relation to one or a plurality of fins.

8. A device according to Claim 7, in which said fin has a cross-sectional profile defining a fin surface area Sa and a channel surface area Sc, measured in the plane of the axis of said tube such that the ratio Sc/Sa is between 0.1 and 10, and preferably between 0.5 and 5.

9. A device according to Claim 8, in which said fin surface area Sa can be bounded by segments of a straight line.

10. A device according to Claim 9, in which said fin surface area Sa is bounded only by segments of a straight line.

11. A device according to Claim 9, in which the upper part of said fin and possibly the outer part of the tube, in contact with said liquid flow, may be grooved in such a way as to increase the surface area for exchange between said liquid flow and the bed of said channel.

12. A device according to Claim 11, in which the upper part of said fin and possibly the part of the tube in contact with said flow of liquid can be provided with regions of roughness to encourage turbulence in order to increase the transfer flow.

13. A device according to Claim 12, in which said fin can be hollow (15) so that it can be traversed by a fluid which may be in counter-current to said liquid flow and which can be different from said fluid flowing in said tube.

14. A device according to Claim 13, in which the material of said tube and possibly that of said fin can be porous and exhibit a membrane effect so that a part of said fluid is able to traverse the wall of said tube, the material of said fin and interact with said liquid flow in a physical, chemical or physico-chemical manner.

15. A device according to Claim 14, in which the material of said tube can be different from the material of said fin.

16. A device according to Claim 15, in which said fin comprises an outer returned edge (8) and the material of said outer returned edge (8) can be different from the material constituting the rest of said fin and possibly be of an insulating material.

17. A device according to any one of Claims 1 to 16, in which the material of said tube and said fin is chosen from those which have a heat conductivity better than $1$ $W.m.^{-1}.K^{-1}$, and preferably better than $8$ $W.m^{-1}.K^{-1}$.

18. A device according to Claim 17, in which the material of said tube and/or of said fin is graphite or a carbonaceous material which is heat conductive.

19. A device according to Claim 17, in which the material of said tube and/or of said fin is metal or a metal alloy.

20. A device according to Claim 17, in which the material of said tube and/or of said fin is a heat-conductive ceramic material.

21. A device according to Claim 17, in which the material of said tube and/or of said fin is a plastics material which has been rendered heat-conductive.

22. A device according to Claim 17, in which the material of said tube and/or of said fin is a heat-conductive composite or multi-layer material.

23. A device or part of a device according to Claim 18, produced by machining or extrusion of said material at all stages of its processing in order to retain the form of said device.

24. A device or part of a device according to Claim 19, produced by machining or moulding of said material, or sintering of metallic powders of said material.

25. A device or part of a device according to Claim 20, produced by moulding or extrusion of said material.

26. A device or part of a device according to Claim 21, produced by extrusion or injection moulding of said material.

27. A device or part of a device according to Claim 22, produced by a method chosen from extrusion, injection, moulding, or pultrusion of said material.

28. A device in which the parts of the device according to Claims 23 to 27 are assembled by a method chosen from mechanical assembly, welding, gluing.

29. A device according to Claim 28, in which a device which does not have an outer returned edge is assembled together with an outer returned edge in order to form said channel and possibly to limit the volume of the gaseous phase just to the space between the turns of the fin(s) of said device in order to permit circulation of a gaseous phase in counter-current with the liquid flow.

30. A device according to Claim 29, in which the outer returned edge is a tube, possibly internally grooved, the inside dimensions of which correspond substantially to the outside dimensions of said device.

31. A device according to any one of Claims 23 to 29, characterised in that all or part of said device has been subjected to a treatment phase or a surface coating.

32. An assembly of devices according to any one of Claims 1 to 22, characterised in that it comprises:

- an enclosure (16) containing a plurality of said devices, disposed parallel with one another
- means of supplying liquid flow situated in the upper part of the enclosure (17)
- means of recovering the liquid flow situated in the lower part of the enclosure (18)
- means permitting circulation of the gaseous phase possibly with one or a plurality of inlets preferably in the bottom part of the enclosure (19) and with one or a plurality of outlets preferably in the upper part of the enclosure (20)
- means permitting the circulation of said fluid inside said tubes (21) and possibly said fin (15) in order to multiply the thermal energy exchange capacity.

33. An assembly of devices according to any one of Claims 1 to 22, in which a plurality of said devices is placed end to end in respect of one another by any known means of joining the tubes and keeping them in alignment.

34. Application of the device according to any one of Claims 1 to 31 to the desorption, evaporation and particularly to industrial evaporators and in air conditioning and to the condensation and absorption of gases or vapours in gas-liquid reactors and in air conditioning.

FIG.1

FIG.1a

FIG. 1b

FIG. 1c

FIG.1d

FIG. 2

FIG. 3

FIG. 4

FIG.5a

FIG. 5b

FIG. 6

18

FIG.7-a

FIG.7-b

FIG.8